# EUROPEAN PATENT APPLICATION

(11) **EP 3 162 625 A1**
(43) Date of publication of application: **03.05.2017**
(21) Application number: 15814471.7
(22) Date of filing: 03.04.2015
(51) Int. Cl.: B60N 2/72

(54) **SEATBACK SPRING ATTACHMENT STRUCTURE**

(30) Priority: 30.06.2014 JP 2014134595
(71) Applicant: Tachi-S Co., Ltd., Akishima-shi, Tokyo 196-8611 (JP)
(72) Inventor: HASHIMOTO Satoshi, Akishima-shi Tokyo 196-8611 (JP); TAKAGI Shun, Akishima-shi Tokyo 196-8611 (JP); HORI Takuya, Akishima-shi Tokyo 196-8611 (JP); YAMAMOTO Kentaro, Akishima-shi Tokyo 196-8611 (JP)
(74) Representative: Burton, Nick
(86) International application number: PCT/JP2015/060603
(87) International publication number: WO 2016/002286

(57) **Abstract**

[Purpose]

To provide a sinuous spring mounting structure in a seat back, which can realize a lightweight and simplified structure of a seat back frame of the seat back.

A sinuous spring or S-spring 10 used in the present invention has left and right end portions 10a and 10b which include two curved regions 10aU and 10bU, respectively. A seat back frame 7 includes left and right cylindrical side frame portions 9L and 9R. One spring mounting portion 11 for allowing the left end portion 10a of the S-spring 10 to be mounted thereto is formed in an outwardly-facing lateral surface area of the left cylindrical side frame portion 9L, whereas the other spring mounting portion 11 for allowing the right end portion 10b of the S-spring 10 to be mounted thereto is formed in an outwardly-facing lateral surface area of the right cylindrical side frame portion 9R. Those two spring mounting portions 11 may be embodied by first and second hole portions 11A-1 and 11A-2, respectively, for example, in which case, two distal ends 10aE and 10bE of the S-spring 10 may be inserted and hookingly secured in the first and second hole portions 11A-1 and 11A-2, respectively, such that the two curved regions 10aU and 10bU of the S-spring 10 are closely contacted on and along two outer circumferential surfaces of the left and right cylindrical side frame portions 9L and 9R, respectively.

## Description

### Technical Field

The present invention relates to a structure or arrangement for mounting a sinuous spring (s) or S-spring (s) to a seat back forming a part of an automotive seat, such that the S-spring (s) is/are secured to a seat back frame of the seat back so as to extend in a transverse direction of the seat back frame.

### Background Art

Conventionally, in this sort of technical field, for example, in Japanese Laid-Open Patent Publications Nos. 2004-148942 and 2004-106647, a seat back frame described therein, which forms a part of a seat back of an automotive seat, includes a pair of left and right side frame portions formed integrally therewith, and a plurality of sinuous springs or S-springs are extended and connected between the left and right side frame portions. The S-springs are arrayed in parallel with one another along a vertical direction of the seat back frame for the purpose of not only supporting a cushion padding thereon, but also giving an elastic cushioning support to a back portion of a seat occupant. A plurality of securing brackets are fixedly disposed by welding to and along each of the left and right side frame portions of the seat back frame, and a distal end of each of the S-springs is inserted and engaged in each of the aforesaid securing brackets, This arrangement facilitates the ease of mounting the S-springs to and along the left and right side frame portions.

### Prior-Art Literature

### Patent-related document

Patent-related Document 1: Japanese Laid-Open Patent Publication No. 2004-148942
Patent-related Document 2: Japanese Laid-Open Patent Publication No. 2004-106647

### Summary of the Invention

### Problems to be Solved by the Present Invention

However, the above-described conventional structure for mounting the S-springs to the seat back frame has been with the problem that it increases a weight of the seat back frame because of the securing brackets added thereto.

It is a purpose of the present invention to provide an improved spring mounting structure of a seat back, which can realize a light weight of a seat back frame and also can make the seat back frame simplified in structure.

### Means for Solving the Problem

In order to achieve the above-stated purpose, according to the present invention, there is provided a sinuous spring mounting structure in a seat back including a seat back frame forming a part of the seat back, the seat back frame including a first cylindrical portion and a second cylindrical portion, wherein the first and second cylindrical portions are disposed in an opposedly-facing relation with each other, and wherein the sinuous spring mounting structure is adapted for allowing at least one sinuous spring to be mounted to the first and second cylindrical portions so as to be extended therebetween,
the sinuous spring mounting structure being characterized in that:
the at least one sinuous spring has: a first end portion including a curved region; and a second end portion including a curved region;
the first cylindrical portion of the seat back frame includes a first mounting portion for allowing the first end portion of the at least one sinuous spring to be mounted thereto; and
the second cylindrical portion of the seat back frame includes a second mounting portion for allowing the second end portion of the at least one sinuous spring to be mounted thereto;
and characterized in that the first and second end portions of the at least one sinuous spring are mounted to the first and second mounting portions, respectively, in such a manner that the curved region of the first end portion is contacted on and along an outer circumferential surface of the first cylindrical portion, whereas the curved region of the second end portion is contacted on and along an outer circumferential surface of the second cylindrical portion.

The above-described sinuous spring mounting structure does not require any additional securing arrangement, such as a securing bracket (s), which assists in firm securing of the sinuous spring (s) to the seat back frame, thus realizing a light weight of the seat back frame and also making the seat back frame simplified in structure. Further, the first and second end portions of the sinuous spring are contacted on and along the two circumferential surface areas of the first and second cylindrical portions of the seat back frame, respectively, thereby extremely increasing contact areas of the sinuous spring's first and second end portions for contact with the corresponding two circumferential surface areas of the first and second cylindrical portions of the seat back frame. Therefore, the sinuous springs can be secured to the seat back frame in a stable, hard-to-move manner, which effectively avoids or minimizes friction of the sinuous spring's first end portion against the first cylindrical portion as well as friction of the sinuous spring's second end portion against the second cylindrical portion. This in turn completely or minimally suppresses objectionable noises that may be generated from such frictions.

According to one exemplary embodiment of the present invention, the aforesaid first mounting portion may comprise a first hole portion configured to allow the first end portion of the at least one sinuous spring to be inserted and hookingly engaged therein, and the aforesaid second mounting portion may comprise a second hole portion configured to allow the second end portion of the at least one sinuous spring to be inserted and hookingly engaged therein. In this embodiment, the first end portion of the at least one sinuous spring may be inserted and hookingly secured in the first hole portion, with the curved region of the first end portion being contacted on and along the outer circumferential surface of the first cylindrical portion, and also, the second end portion of the at least one sinuous spring may be inserted and hookingly secured in the second hole portion, with the curved region of the second end portion being contacted on and along the outer circumferential surface of the second cylindrical portion. This embodiment requires no other operation but to simply insert two distal ends of the sinuous spring into the first and second hole portions, respectively, for completion of secure mounting of the sinuous spring to the first and second cylindrical portions.

According to another exemplary embodiment of the invention, the aforesaid first mounting portion may comprise a first truncated-conical hole portion formed in the first cylindrical portion, such first truncated-conical hole portion opening divergent in a direction from an inside to the outer circumferential surface of the first cylindrical portion, and therefore the first truncated-conical hole portion may have a sloped surface that becomes narrow in area in a direction from the outer circumferential surface to the inside of that first cylindrical portion. And, on the other hand, the aforesaid second mounting portion may comprise a second truncated-conical hole portion formed in the second cylindrical portion, such second truncated-conical hole portion opening divergent in a direction from an inside to the outer circumferential surface of the second cylindrical portion, and therefore the second mounting portion may have a sloped surface that becomes narrow in area in a direction from the outer circumferential surface to the inside of that second cylindrical portion. In this embodiment, the first end portion of the at least one sinuous spring may be inserted and hookingly secured in the first truncated-conical hole portion, with the curved region of the first end portion being contacted on and along the outer circumferential surface of the first cylindrical portion, and the second end portion of the at least one sinuous spring be inserted and hookingly secured in the second truncated-conical hole portion, with the curved region of the second end portion being contacted on and along the outer circumferential surface of the second cylindrical portion. The present embodiment therefore allows the two distal ends of the sinuous spring to be slidingly guided on the two sloped surfaces of the first and second truncated-conical hole portions, respectively, and thus smoothly introduced into those particular first and second truncated-conical hole portions, respectively. This does not require much care on the worker's side in inserting and engaging the sinuous spring's two distal ends in those two truncated-conical hole portions, respectively, so that the worker can simply, quickly finish the spring mounting operation.

According to still another embodiment, the aforesaid first mounting portion may comprise a first recessed mounting portion formed in the first cylindrical portion so as to extend in a circumferential direction along the outer circumferential surface of the first cylindrical portion, and the aforesaid second mounting portion may comprise a second recessed mounting portion formed in the second cylindrical portion so as to extend in a circumferential direction along the outer circumferential surface of the second cylindrical portion. In this embodiment, the first end portion as well as the curved region thereof, which are formed in the at least one sinuous spring, may be both hookingly engaged in and along the first recessed mounting portion, and also, the second end portion as well as the curved thereof, which are formed in the at least one sinuous spring, may be both hookingly engaged in and along the second recessed mounting portion. In other words, the present embodiment features a circumferentially extending recess in each of the first and second cylindrical portion, which is defined by each of the first and second recessed mounting portions. This enables a worker to directly see and ascertain a point where the sinuous spring's end portion must be mounted in position. Further, what the worker should do in this respect is an extremely easy, quick action that simply consists of: putting the sinuous spring's first and second end portions in the aforementioned first and second recessed mounting portions, respectively; and then causing those two end portions to slide in and along the two circumferentially extending recesses of the first and second recessed mounting portions, respectively, until completion of hooking engagement of the sinuous spring's two end portions in and along the corresponding first and second recessed mounting portions.

In each of all the foregoing embodiments, the first and second end portions of the at least sinuous spring may each be coated with a resin material. With this resin coating, any frictions of the sinuous spring's first and second end portions against the first and second cylindrical portions may be precluded, thereby completely suppressing objectionable noise that might be generated from such frictions.

### Effects of the Invention

According to the present invention, it is possible to realize a light weight of a seat back frame and provide a simplified spring mounting structure.

### Brief Description of the Drawings

[Fig. 1]: A perspective view showing one exemplary mode of a seat having a seat back to which is applied a sinuous spring mounting structure of the present invention.
[Fig. 2]: A partly-broken perspective view showing a first embodiment of sinuous spring mounting portion as applied to the sinuous spring mounting structure in the seat back, in accordance with the present invention.
[Fig. 3]: A sectional view taken along the line III - III in the Fig. 1, in which a sinuous spring is shown to be mounted to left and right cylindrical side frame portions of the seat back frame so as to be extended therebetween, according to the first embodiment of sinuous spring mounting portion.
[Fig. 4]: A fragmentary sectional view showing a second embodiment of the present invention, in which a resin material is coated on an end portion of the sinuous spring.
[Fig. 5]: A partly-broken perspective view showing a third embodiment of sinuous spring mounting portion as applied to the sinuous spring mounting structure in the seat back, in accordance with the present invention.
[Fig. 6]: A fragmentary sectional view showing a principal part of the third embodiment of the present invention.
[Fig. 7]: A fragmentary sectional view in which a sinuous spring is shown to be mounted to the left and right cylindrical side frame portions of the seat back frame so as to be extended therebetween, according to the third embodiment of the present invention.
[Fig. 8]: A partly-broken perspective view showing a fourth embodiment of sinuous spring mounting portion as applied to the sinuous spring mounting structure in the seat back, in accordance with the present invention.
[Fig. 9]: A fragmentary sectional view showing a principal part of the fourth embodiment of the present invention.
[Fig. 10]: A fragmentary sectional view in which a sinuous spring is shown to be mounted to the left and right cylindrical side frames portions of the seat back frame so as to be extended therebetween, according to the fourth embodiment of the present invention.

### Mode for Carrying Out the Invention

Referring to the annexed drawings, there are illustrated several preferred embodiments related to a spring mounting structure in a seat back, in accordance with the present invention, in which sinuous springs or S-springs are mounted in the seat back, and each of the embodiments will be described in details hereinafter.

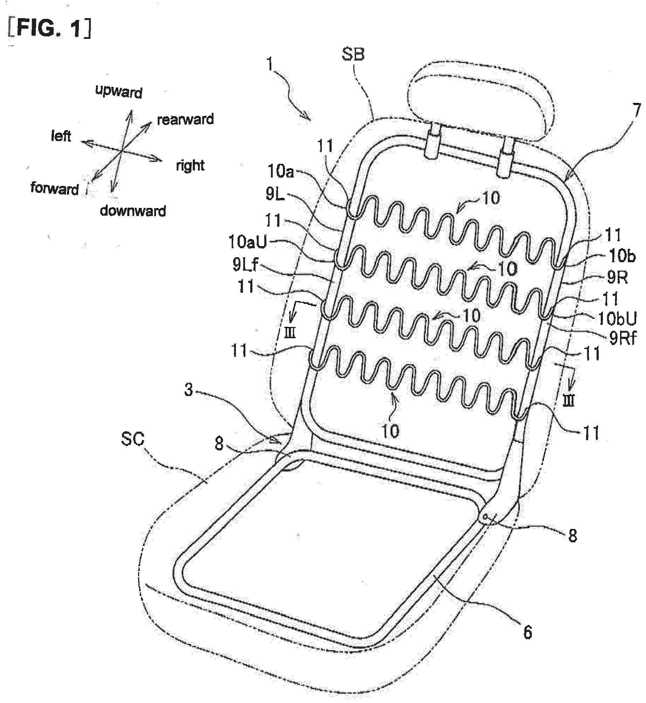

As shown in Fig. 1, an automotive seat 1 is comprised of: a seat cushion SC; a seat back SB foldable forwardly relative to the seat cushion SB; and a reclining portion 3 for permitting adjustable inclination of the seat back SB.

The seat cushion SC includes a seat cushion frame 6 provided therein, and the seat back SB includes a seat back frame 7 provided therein. Lower ends of the seat back frame 7 are rotatably connected with two free ends of the seat cushion frame 6, respectively, via hinge portions 8 and 8.

The seat back frame 7 has a pair of left and right cylindrical side frame portions 9L and 9R. Each of the left and right cylindrical frame portions 9L and 9R has a circular cross-section and may be formed from a metallic tubular material, for instance. As shown in Fig. 1, the left and right cylindrical frame portions 9L and 9R are disposed in an opposedly-facing relation with each other, and extended therebetween are a plurality of spring elements 10 that are arrayed in parallel with one another along a vertical direction of the seat back frame for the purpose of offering a cushioning support to a back portion of a seat occupant.

According to a generic concept of the present invention, as seen from Fig. 1, it can be summarized that the following basic structural points are provided:
a) Each of the spring elements 10 is commonly formed as a sinuous spring or S-spring which has a first end portion 10a and a second end portion 10b, each being formed in a substantially hooked shape. Those two end portions 10a and 10b are identical to each other in shape and size. Further, the first end portion 10a includes a curved region 10aU shaped to closely contact a predetermined circumferential surface area of the left cylindrical side frame portion 9L in conformity therewith, whereas likewise the second end portion 10b includes a curved region 10bU shaped to closely contact a predetermined circumferential surface area of the right cylindrical side frame portion 9R in conformity therewith.
b) A pair of spring mounting portions are provided to the opposedly-facing left and right cylindrical side frame portions 9L and 9R, respectively, such two spring mounting portions being adapted for allowing the first and second end portions 10a and 10b of each S-spring 10 to be mounted thereto. The left and right cylindrical side frame portions 9L and 9R have a first outwardly-facing lateral region 9La and a second outwardly-facing lateral region 9Ra, respectively. Defined direct in the first outwardly-facing lateral region 9La is a first one of the aforesaid two spring mounting portions, whereas defined direct in the second outwardly-facing lateral region 9Ra is the other second spring mounting portion. Now, in a generic sense, such spring mounting portions shall be referred to as "conceptual spring mounting portions 11 and 11 ", as recognizable from reference numerals 11 in Fig. 1.

Owing to the quite simplified structure summarized above, in accordance with the gist and technical concept of the present invention, the first and second end portions 10a and 10b of the S-spring 10 can first be contacted on and along the two circumferential surface areas 9Lf and 9Rf, respectively, following which, continuously, the two distal end portions of those first and second end portions can be hookingly mounted to the two spring mounting portions 11 and 11, respectively. With such simple mounting, it is possible to realize rapid, easy operation for not only connecting the S-springs 10 to and between the two cylindrical side frame portions 9L and 9R in position, but also preventing removal of the S-springs 10 therefrom. Further, no additional securing element is required for firm mounting of the S-springs to the cylindrical side frame portions, which therefore simplifies the structure of the seat back and also decreases a weight of the seat back frame 7. Still further, the first and second end portions 10a and 10b of the S-spring 10 are contacted on and along the two circumferential surface areas 9Lf and 9Rf, respectively, in an embracing manner, thereby extremely increasing contact areas of the first and second end portions 10a and 10b for contact with the corresponding two circumferential surface areas 9Lf and 9Rf. In other words, the first and second end portions 10a and 10b are each provided with a greatly increased support area to be supported by the corresponding two cylindrical side frame portions. Thus, when and while a back portion of a seat occupant rests on and contacts the seat back, the S-springs are kept in the state of being pressed and biased toward a rearward side of the seat back frame 7, whereby entire or substantive areas of the first and second end portions 10a and 10b of the S-springs are positively kept in contact with the circumferential surface areas 9Lf and 9Rf, respectively, which completely avoids or minimally reduces dislocation and vibration of the two end portions 10a and 10b in any of left and right directions as well as in any of upward and downward directions. Hence, a stable, hard-to-move attachment of the S-springs to the cylindrical side frame portions is achievable in effect. By those technical reasons, it is possible to avoid or minimize a rattling, keen frictions and objectionable noise, all of which may be caused from contact between the S-spring's first end portion 10a and the left cylindrical side frame portion as well as from contact between the S-spring's second end portion 10b and the right cylindrical side frame portion.

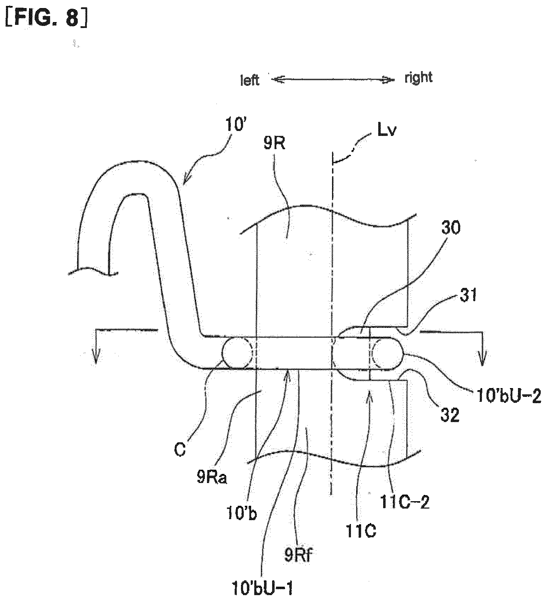

In this connection, it is to be understood that an embodiment shown in Figs. 8 to 10 is also encompassed by and within the above-described gist and technical concept of the present invention. Namely, based on the general definitions given above, a spring element 10' shown therein is a sinuous spring or S-spring which has a first end portion 10'a and a second end portion 10'b, each being formed in a substantially hooked shape, and such first and second end portions 10'a and 10'b are identical to each other in shape and size. Further, within the general definitions above, the first end portion 10'a includes two curved regions 10'aU-1 and 10'aU-2 shaped to closely contact predetermined localized circumferential surface areas of the left cylindrical side frame portion 9L in conformity therewith, while likewise the second end portion 10'b includes two curved regions 10'bU-1 and 10'bU-2 shaped to closely contact a predetermined localized circumferential surface area of the cylindrical side frame portion 9R in conformity therewith. Also, a pair of spring mounting portions 11C-1 and 11C-1, embodying an exemplary mode of the foregoing conceptual spring mounting portions, are provided in the opposedly-facing left and right cylindrical side frame portions 9L and 9R, respectively. The two spring mounting portions 11C-1 and 11C-1 are adapted for allowing the first and second end portions 10'a and 10'b of the S-spring 10' to be mounted thereto, respectively, and arranged such that one first spring mounting portion 11C-1 is defined direct in the outwardly-facing lateral region 9La of the left cylindrical side frame portion 9L, whereas the other second spring mounting portion 11C-1 is defined direct in the outwardly-facing lateral region 9Ra of the right cylindrical side frame portion 9R.

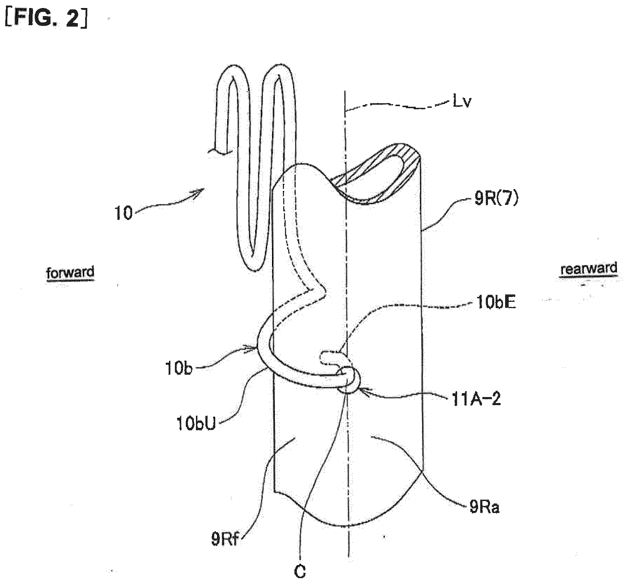

Hereinafter, within the above-noted general gist and technical concept of the present invention, a specific description will be made as to exemplary embodiments of the spring mounting structure in the seat back, with reference to Figs. 2 to 9 of the annexed drawings, to illustrate several variant modes of the conceptual mounting portions 11 and 11 stated above.

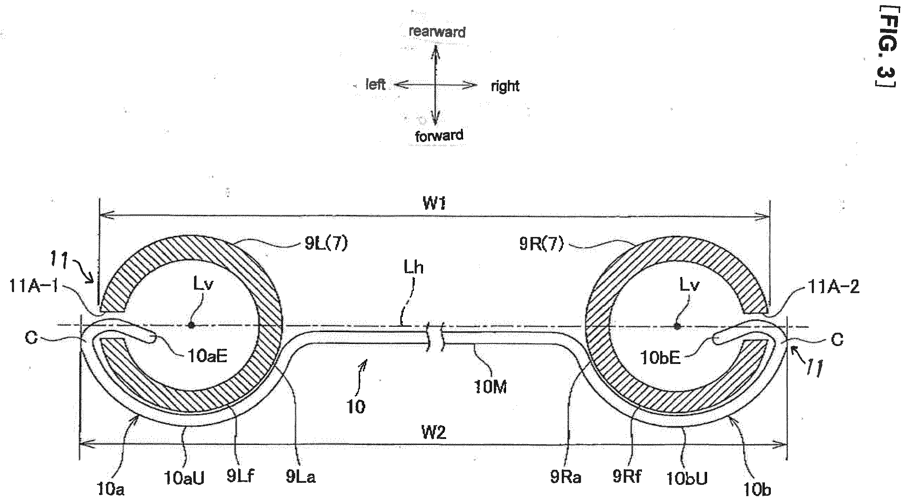

Reference is first made to Figs. 2 and 3 which show a first exemplary embodiment of the present invention. According to this first embodiment, the two conceptual spring mounting portions 11 and 11 defined above may be embodied by a first hole portion 11A-1 and a second hole portion 11A-2, respectively. As shown, the first hole portion 11A-1 is formed in an outwardly-facing lateral region 9La of the left cylindrical side frame portion 9L, whereas the second hole portion 11A-2 is formed in an outwardly-facing lateral regions 9Ra of the right cylindrical side frame portion 9R. Formation of those first and second hole portions 11A-1 and 11A-2 may be effected by a drilling or press-working process, such that the said first and second hole portions penetrate the corresponding two lateral regions 9La and 9Ra, respectively, to communicate with two hollow insides of the left and right cylindrical side frame portions, respectively. In this regard, more specifically, the first hole portion 11A-1 is located centrally of the outwardly-facing lateral region 9La of the left cylindrical side frame portion 9L, whereas the second hole portion 11A-2 is located centrally of the outwardly-facing lateral region 9Ra of the right cylindrical side frame portion 9R, in such a manner that a center of the first hole portion 11A-1 and a center of the second hole portion 11A-2 are both positioned on a horizontal line Lh, thereby being in an opposedly-facing and coaxial relation with each other, wherein the horizontal line Lh is orthogonal to both two vertical central axes Lv respectively of the left and right cylindrical side frame portions 9L and 9R.

As shown in Fig. 3, according to this first embodiment, the S-spring element 10 defined above may be an S-spring 10 formed to include: a first end portion 10a having a curved region 10aU defined therein; and a second end portion 10b having a curved region 10bU defined therein. Those two curved regions 10aU and 10bU are so configured and dimensioned to allow their respective close contacts on and about the two forwardly-facing circumferential surface areas 9Lf and 9Rf of the left and right cylindrical side frame portions 9L and 9R, wherein it is noted that the left forwardly-facing circumferential surface area 9Lf extends along substantially a half circumference of the left cylindrical side frame portion 9La, whereas the right forwardly-facing circumferential surface area 9Rf extends along substantially a half circumference of the right cylindrical side frame portion 9R. Further, the two curved regions 10aU and 10bU are respectively formed with first and second distal ends 10aE and 10bE, integrally, in such a manner that those two distal ends 10aE and 10bE extend toward each other in a direction to a midway point of a longitudinal main body portion of the spring S.

In practice, when mounting the aforesaid S-spring 10 to both left and right cylindrical side frame portions 9L and 9R, a worker should first hold both two end portions 10a and 10b of the S-spring 10, then stretch that S-spring 10 long resiliently in the left and right longitudinal directions thereof, and finally insert the two distal ends 10aE and 10bE of the S-spring into the first and second hole portions 11A-1 and 11A-2 of the left and right cylindrical side frame portions 9L and 9R, respectively. With these simple steps, the two distal end portions 10aE and 10bE of the S-spring are hookingly, securely engaged in the first and second hole portions 11A-1 and 11A-2, respectively, while at the same time, the two curved regions 10aU and 10bU are kept in close contact with and along the forwardly-facing circumferential surface areas 9Lf and 9Rf of the left and right cylindrical side frame portions 9L and 9R, respectively. In this regard, it is preferably important that each of the two curved portions 10aU and 10bU should closely contact the corresponding one of the two forwardly-facing circumferential surface areas 9Lf and 9Rf over substantially an overall circumferential length thereof, as shown in Fig. 3. (The wording "substantially an overall circumferential length" refers to substantially an overall length of each of the two forwardly-facing circumferential surface areas, as viewed in the transverse direction thereof, which extends along an arch over substantially an entire outer diameter of each of the two cylindrical side frames 9L and 9R.) Also, it is preferably important that the S-spring 10M be located forwardly of the horizontal line Lh and extended adjacently therealong (or may be extended on and along that horizontal line Lh in a coaxial manner).

Further, an overall length W1 of the S-spring 10 (a distance between two outermost ends C and C of that spring) should be slightly smaller than an overall width W2 given between the left and right cylindrical side frame portions 9L and 9R. As such, the S-spring 10, upon its being attached to the left and right cylindrical side frame portions 9L and 9R, is stretched outwardly, while causing a resilient contracting force therein, whereby both two distal end portions 10aE and 10bE of the S-spring are resiliently biased toward each other in a direction inwardly of the S-spring. Under such biasing force, the two distal end portions 10aE and 10bE are so firmly engaged in the first and second hole portions 11A-1 and 11A-2, respectively, enough to prevent rattling and wobbling of the two distal end portions themselves on the corresponding left and right cylindrical side frame portions. This also ensures that the two curved regions 10aU and 10bU of the S-spring are maintained in close contact with and along the two forwardly-facing circumferential surface areas 9Lf and 9Rf of the left and right cylindrical side frame portions.

In addition to the above-described arrangement of the S-spring 10, it is to be noted that a center of the first hole portion 11A-1 and a center of the second hole portion 11A-2 are in a coaxial relation with each other, since those two centers are both located on the horizontal line Lh orthogonal to the two vertical central axes Lv respectively of the left and right cylindrical side frames 9L and 9R. Accordingly, the resilient contracting force caused in the S-spring 10 acts in a direction along that horizontal line Lh and is therefore equally distributed to each of the two outermost ends C and C associated respectively with the two curved regions 10aU and 10bU of the S-spring 10. Due to such equal distribution of the resilient contracting force, no toggle action is caused in each of the two curved regions 10aU and 10bU. This arrangement therefore ensures that the resilient contracting force of the S-spring is always concentrated equally to each of the two outermost ends C and C respectively of the two curved regions 10aU and 10bU of the S-spring. In other words, the resilient contracting force works solely for firm engagement of the S-spring with the first and second hole portions 11A-1 and 11A-2, thereby avoiding or minimizing the possibility of irregular force component (s) being derived from the resilient contracting force, which may destabilize the engagement of the S-spring with the two hole portions. Because of these technical effects, the two curved regions 10aU and 10bU are maintained in a stable, hard-to-move condition upon the forwardly-facing circumferential surface areas 9Lf and 9Rf, respectively, and thus positively maintained in close contact therewith. This in effect prevents removal of the two distal ends 10aE and 10bE of the S-spring 10 from the first and second hole portions 11A-1 and 11A-2, respectively.

The above-described stable mounting of the S-spring is also effective for reducing frictions and objectionable noises to a lowest possible degree, even when a vibration is imparted to the S-springs from a seat occupant or a vehicle body. Namely, irrespective of such vibration exerted on the S-spring, the aforementioned arrangement surely minimizes friction of the S-spring's distal end portions 10aE and 10bE against the corresponding first and second hole portions 11A-1 and 11A-2 as well as generation of objectionable noise due to that friction, and also minimizes friction of the S-spring's curved regions 10aU and 10bU against the corresponding two forwardly-facing circumferential surface areas 9Lf and 9Rf as well as generation of objectionable noise due to that friction. Therefore, any uncomfortable touch and uneasiness that might normally occur in these aspects will not be felt by a seat occupant.

In this context, the two distal end portions 10aE and 10bE of the S-spring may optionally be formed rectilinear, instead of the shown shapes thereof, so that they extend straight along the horizontal line Lh when inserted in the first and second hole portions 11A-1 and 11A-2, respectively. Even in that case, such two rectilinear distal end portions can hardly be removed from the first and second hole portions 11A-1 and 11A-2, respectively, thanks to the above-described stable spring mounting wherein substantially an entirety of each of the two curved regions 10aU and 10bU is closely contacted with the corresponding one of the two forwardly-facing circumferential surface areas 9Lf and 9Rf of the cylindrical side frame portions. However, to be safe, each of the first and second distal ends 10aE and 10bE should preferably be bent in the shown manner, such that it is bent and positioned forwardly of the horizontal line Lh, because this bent mode can positively prevent removal of the two distal ends 10aE and 10bE from the corresponding first and second hole portions, with great reliability, in comparison with the suggested rectilinear distal end portions.

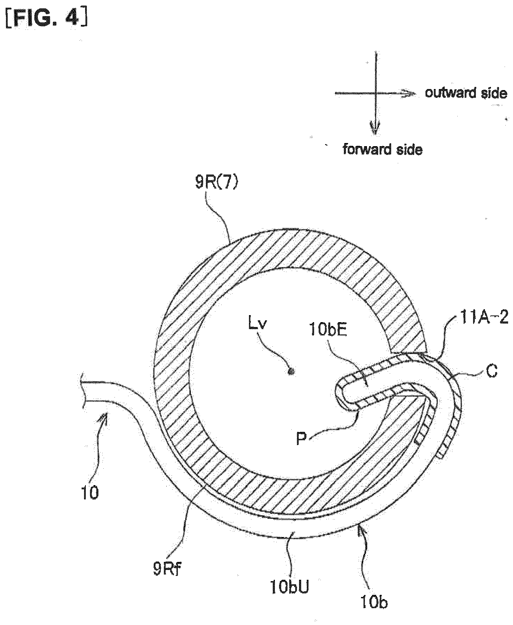

In the present invention, with regard to the foregoing first embodiment of S-spring 10, one additional variant mode may be provided, which suggests resin coating to the S-spring. As indicated in Fig. 4, a resin coating P may be applied to the second end portion 10b of the S-spring 10, such that the resin coating may cover that second end portion in a range of from the distal end portion 10bE of the S-spring to a point at or beyond the outermost end C of the S-spring. Though not shown, likewise, the resin coating P may also be applied to the first end portion 10a of the S-spring 10 so as to coat that first end portion in a range of from the distal end portion 10aE of the S-spring to a point at or beyond the outermost end C of the S-spring. An actual range of such resin coating on the first end portion 10a can be determined by referring to Fig. 3 in comparison with the shown resin coating range of the second end portion 10b. This resin coating is effective in not only precluding direct contact of the distal ends 10aE and 10bE with the corresponding first and second hole portions 11A-1 and 11A-2, but also precluding direct contact of the two outermost ends C and C with the corresponding first and second hole portions 11A-1 and 11A-2, whereby any objectionable noise that might be generated from those localized contacts can be suppressed completely. Further, in addition to that coating, the resin coating P may be applied to a whole of the first curved region 10aU of the S-spring as well as to a whole of the second curved region 10bU thereof, wherein those two curved regions 10aU and 10bU are both shown in Fig. 3. With this additional coating, an entirety of the first end portion of the S-spring as well as an entirety of the second end portion thereof can be prevented from their respective direct contacts with the forwardly-facing circumferential surface areas 9Lf and 9Rf of the left and right side frame portions 9L and 9R, thereby achieving complete suppression of objectionable noises that might be generated from such direct contacts.

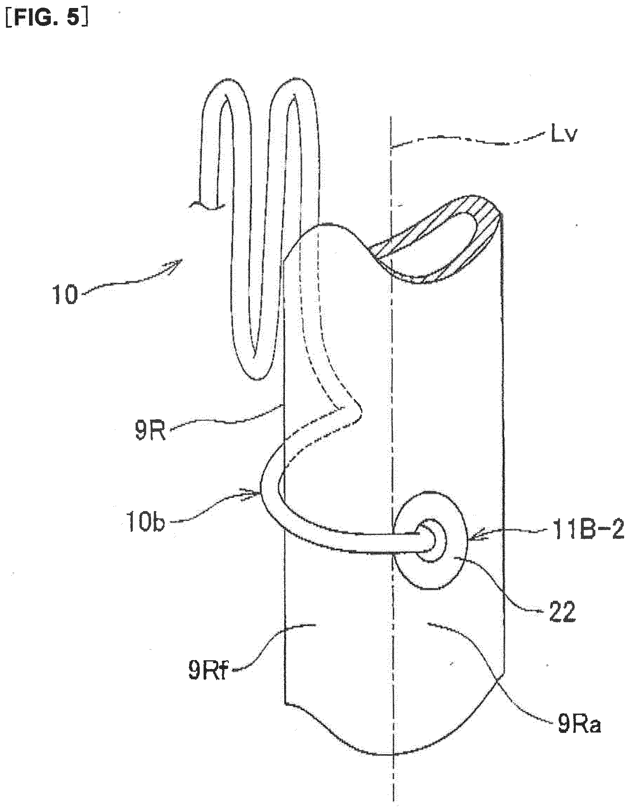

Figs. 5 to 7 show a third embodiment of the present invention. In this third embodiment, except for two spring mounting portions 11 B-1 and 11 B-2 to be described later, all elements and parts used are identical to the elements and parts described in the preceding first embodiment.

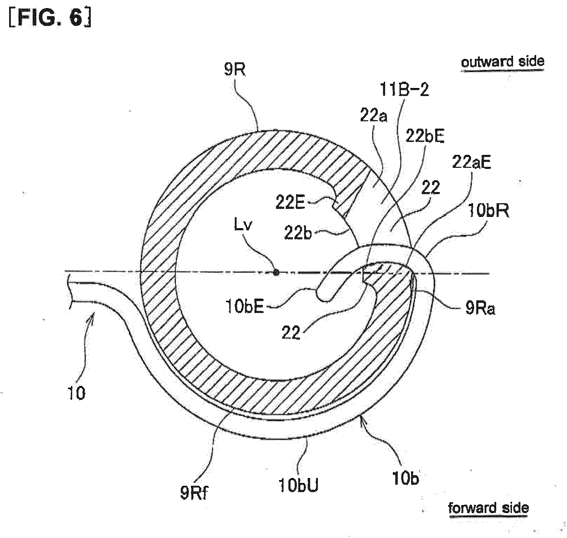

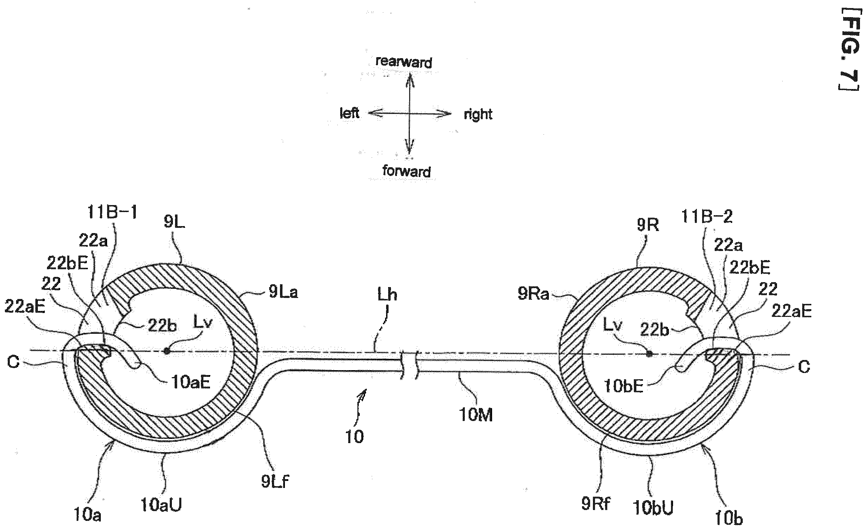

Hence, all like designations given in the present third embodiment correspond to all like designations in the first embodiment, and for the sake of simplicity, any detailed description is omitted for all the elements and parts commonly used between the first and third embodiments. As shown in Fig. 7, in the present embodiment, a first truncated-conical hole portion 11 B-1 is formed in the outwardly-facing lateral surface area 9La of the left cylindrical side frame portion 9L, and a second truncated-conical hole portion 11 B-2 is formed in the outwardly-facing lateral surface area 9Ra of the left cylindrical side frame 9R portion. Each of the two truncated-conical hole portions 11 B-1 and 11 B-2 has a radially sloped surface 22 which progressively diverges toward the outside thereof, and may be formed by an appropriate press-working process or a burring process designed to form that particular truncated-conical hole portion. Formation of each of the truncated-conical hole portion 11 B-1 and 11 B-2 is such that it defines a large-diameter opening 22a; a small-diameter opening 22b; and an annularly protruding region 22E behind those two openings, the annularly protruding region 22E protruding to the hollow inside of the corresponding one of the left and right cylindrical side frame portions 9L and 9R. (See Fig. 6)

The foregoing first and second truncated-conical hole portions 11 B-1 and 11 B-2 are both situated at a location behind or rearwardly of the horizontal line Lh stated above. As depicted in Figs. 6 and 7, those two truncated-conical hole portions 11 B-1 and 11 B-2 are each commonly arranged such that the small-diameter opening 22b thereof includes a forwardly-oriented inward end area 22bE (because it is slightly oriented to a forward side of the annularly protruding region 22E, which faces a forward side of the seat back frame), whereas the large-diameter opening 22a thereof includes a laterally-oriented outward end area 22aE oriented to a lateral side of the seat back frame, and that both forwardly-oriented inward area 22bE and laterally-oriented outward end area 22aE are located on or adjacent the horizontal line Lh which is orthogonal to the two vertical central axes Lv respective of the two cylindrical side frame portions.

As stated above, the present third embodiment illustrates formation of the first and second truncated-conical hole portions 11 B-1 and 11 B-2 in the left and right cylindrical side frame portions 9L and 9R, respectively, and each of S-springs, identical to the S-spring 10 of the preceding first embodiment, is mounted to the two truncated-conical hole portions 11 B-1 and 11 B-2 so as to be extended between the two cylindrical side frame portions. Practically, though not shown, a worker may hold the left and right end portions 10a and 10b of the S-spring 10 and stretch the S-spring 10 outwardly along the longitudinal direction thereof, after which, those two end portions 10a and 10b may be inserted by the worker into the first and second hole truncated-conical hole portions 11B-1 and 11 B-2, respectively. During this operation, it is appreciated that the two large-diameter openings 22a and 22a, formed respectively in the two truncated-conical hole portions 11 B-1 and 11 B-2, permit the two distal ends 10aE and 10bE of the S-spring to smoothly, quickly enter the two hole portions 11 B-1 and 11 B-2, respectively, at one time, and also allow the said two distal ends 10aE and 10bE to be slidingly guided thereon and introduced into the two hollow insides of the two cylindrical side frame portions 9L and 9R, respectively, at one time. This arrangement does not require much care on the worker's side in inserting and engaging the S-spring's two distal ends 10aE and 10bE in the two truncated-conical hole portions 11B-1 and 11 B-2, respectively, and therefore the worker can simply, quickly finish the spring engagement. In addition, immediately after that spring engagement, the two curved regions 10aU and 10bU of the S-spring are automatically, positively brought into close contact on and along the two forwardly-facing circumferential surface areas 9Lf and 9Rf of the left and right cylindrical side frame portions 9L and 9R, respectively. This spring mounting structure may be suitably applied to a fully-automated assembly process or a robotic assembling system for production of seats.

In the present embodiment, it is preferably important that each of the two curved regions 10aU and 10bU should closely contact the corresponding one of the two forwardly-facing circumferential surface areas 9Lf and 9Rf over substantially an overall circumferential perimeter of the latter, as seen in Fig. 7. (The wording "substantially an overall circumferential perimeter" refers to substantially an overall perimeter of each of the two forwardly-facing circumferential surface areas, which extends along an arch over substantially an entire outer diameter of the corresponding one of the two cylindrical side frame portions 9L and 9R.) Also, it is preferably important that the main body portion 10M of the S-spring 10 be located forwardly of the horizontal line Lh and extended adjacently therealong, as seen in Fig. 7.

Further, in this third embodiment shown in Figs. 5 to 7, prior to mounting the S-spring 10 to the left and right cylindrical side frame portions, it is preferable that each of the first and second distal end portions 10aE and 10bE of the S-spring should be bent in advance to provide a bent distal end portion, as shown in Figs. 6 and 7, such that the thus-formed two bent distal end portions 10aE and 10bE are inclined in a direction from the horizontal line Lh to a forward side of the seat back frame. Due to that bent configuration, when the S-spring is engaged with the left and right cylindrical side frame portions, it is to be seen that the first bent distal end portion 10aE of the S-spring not only contacts the forwardly-oriented inward end area 22bE of the small-diameter opening 22b of the first truncated-conical hole portion 11 B-1, but also contacts the laterally-oriented outward end area 22aE of the large-diameter opening 22a of that first truncated-conical hole portion 11B-1, while on the other hand, the second bent distal end portion 10bE of the S-spring not only contacts the forwardly-oriented inward end area 22bE of the small-diameter opening 22b of the second truncated-conical hole portion 11 B-2, but also contacts the laterally-oriented outward end area 22aE of the large-diameter opening 22a of that second truncated-conical hole portion 11 B-2. Accordingly, there is established a two-point contact between the first bent distant end portion 10aE and the first truncated-conical hole portion 11B-1 as well as between the second distal end portion 10bE and the second truncated-conical hole portion 11 B-2. Due to such two-point-contact arrangement, the first and second bent distal end portions 10aE and 10bE are firmly snagged on and in the first and second truncated-conical hole portions 11B-1 and 11B-2, respectively, thereby being positively retained unremovable therefrom.

In addition to the above-described arrangement of the S-spring 10, with reference to Fig. 7, it is observed that the forwardly-oriented inward end area 22bE of the small-diameter opening 22b as well as the laterally-oriented outward end area 22aE of the large-diameter opening 22a are both located on or adjacent one and the same horizontal line Lh orthogonal to the two vertical central axes Lv respectively of the two cylindrical side frame portions. Because of this arrangement, the resilient contracting force caused in the S-spring 10 acts only in one direction along the horizontal line Lh and is therefore equally distributed to each of the two outermost ends C and C respectively of the two curved regions 10aU and 10bU of the S-spring 10. Hence, no toggle action is caused in each of the S-spring's curved regions 10aU and 10bU, so that the resilient contracting force of the S-spring 10 is intensively applied to each of the aforesaid two outermost ends C and C only. In other words, such resilient contracting force works solely for firm engagement of the S-spring with the first and second truncated-conical hole portions 11B-1 and 11B-2, thereby avoiding or minimizing the possibility of other irregular force component (s) being derived from that resilient contracting force, which may destabilize the engagement of the S-spring with the two truncated-conical hole portions. Accordingly, the two curved regions 10aU and 10bU of the S-spring are maintained in a stable, close contact with the two forwardly-facing circumferential surface areas 9Lf and 9Rf, respectively. In particular, when and while a seat occupant sits on the seat, a back portion of his or her exerts a backward load upon the S-springs 10 all the time, which keeps on strongly biasing the two curved regions 10aU and 10bU of the S-spring into close contact with the two forwardly-facing circumferential surface areas 9Lf and 9Rf, respectively. This factor adds to close contact between each of the S-spring's two curved regions and the corresponding one of the two forwardly-facing circumferential surfaces of the left and right cylindrical side frame portions, and such enhanced close contact therebetween is stably maintained all the time while the occupant is sitting on the seat.

The above-described stable mounting of the S-spring is also effective for reducing frictions and objectionable noises to a lowest possible degree, even when a vibration is imparted to the S-springs from a seat occupant or a vehicle body. Namely, irrespective of such vibration being exerted on the S-spring, the aforementioned arrangement surely minimizes friction of the S-spring's distal end portions 10aE and 10bE against the corresponding first and second truncated-conical hole portions 11B-1 and 11B-2 as well as generation of objectionable noise due to that friction, and also minimizes friction of the S-spring's curved regions 10aU and 10bU against the corresponding two forwardly-facing circumferential surface areas 9Lf and 9Rf as well as generation of objectionable noise due to that friction. Therefore, any uncomfortable touch and uneasiness that might normally occur in these aspects will not be felt by a seat occupant.

While not shown for this third embodiment, optionally, likewise in Fig. 4, a resin coating at P may be applied to the S-spring 10, such that one end portion of the S-spring is coated therewith in a range of from the distal end portion thereof to a point at or beyond the outermost end (C) thereof, while the other end portion of the S-spring is coated therewith in a range of from the distal end portion thereof to a point at or beyond the outermost end (C) thereof. With this coating, it is possible to prevent direct contact of the S-spring with the first and second truncated-conical hole portions 11 B-1 and 11 B-2 and therefore completely suppress objectionable noises that might be generated from such direct contact. Further, in addition thereto, the resin coating P may be applied to a whole of the curved region 10aU of the S-spring as well as to a whole of the curved region 10bU thereof. This additional coating will cover all the portions of the S-spring that contact the left and right cylindrical side frame portions 9L and 9R, thereby achieving complete suppression of objectionable noises that might be generated from contact between the S-spring and the two cylindrical side frame portions.

Figs. 8 to 10 shows a fourth alternative embodiment of the present invention. The present fourth embodiment employs an S-spring 10' different than the S-springs of all the preceding embodiments and also comprises first and second recessed mounting portions 11C-1 and 11C-2 different than all the previously-stated spring mounting portions, such two recessed mounting portions 11C-1 and 11C-2 being another alternative exemplary mode of the conceptual mounting portions 11. Except for those elements, both left and right cylindrical side frame portions 9L and 9R used in this embodiment are identical to the left and right cylindrical side frame portions described in all the preceding embodiments, respectively, for which it is noted that all like designations used in the preceding embodiments correspond to all like designations to be used in the present fourth embodiment, and therefore a specific description is omitted as to the common elements and parts among this embodiment and other preceding embodiments, for the sake of simplicity.

According to this fourth embodiment, reference being made to Figs. 8 to 10, the first and second recessed mounting portions 11C-1 and 11C-2 are shown to be formed in the left and right cylindrical side frame portions 9L and 9R, respectively, such that each of the two recessed mounting portions defines the shown recess in the corresponding one of the two cylindrical side frame portions, wherein such recessed mounting portion may be formed by a press-working process.

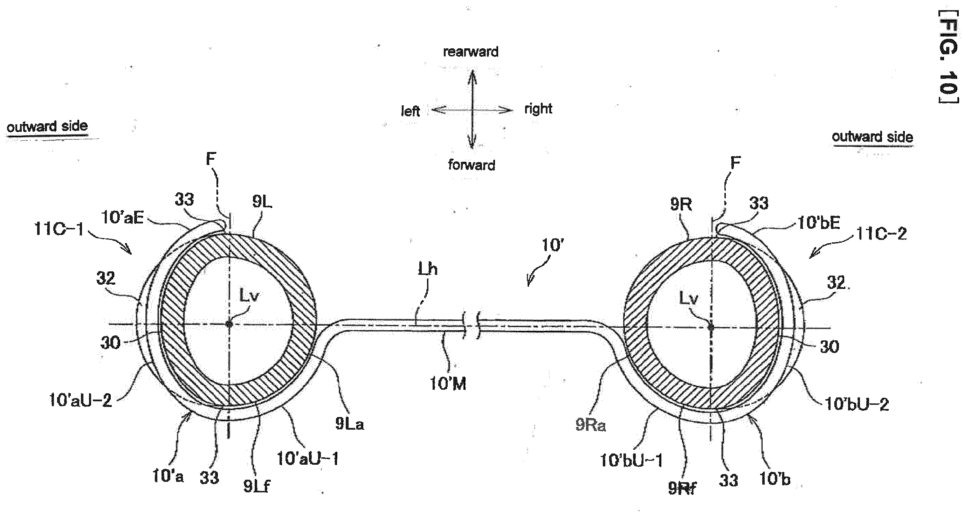

More specifically, as shown in Fig. 10, the first recessed mounting portion 11C-1 is formed in an outwardly-facing lateral region of the left cylindrical side frame portion 9L so as to extend arcuately along a half circumference of that particular left cylindrical side frame portion, with both two terminating ends of the first recessed mounting portion 11C-1 being oriented to an inwardly-facing side of the left cylindrical side frame portion 9L in substantially a parallel relation with the horizontal line Lh, wherein the horizontal line Lh is orthogonal to the vertical central axis Lv of the left cylindrical side frame portion 9L. On the other hand, similarly thereto, the second recessed mounting portion 11C-2 is formed in an outwardly-facing lateral region of the right cylindrical side frame portion 9R so as to extend arcuately along a half circumference of that particular right cylindrical side frame portion, with both two terminating ends of the second recessed mounting portion 11C-2 being oriented to an inwardly-facing side of the right cylindrical side frame portion 9R in substantially a parallel relation with the aforesaid horizontal line Lh which is also orthogonal to the vertical central axis Lv of the right cylindrical side frame portion 9R.

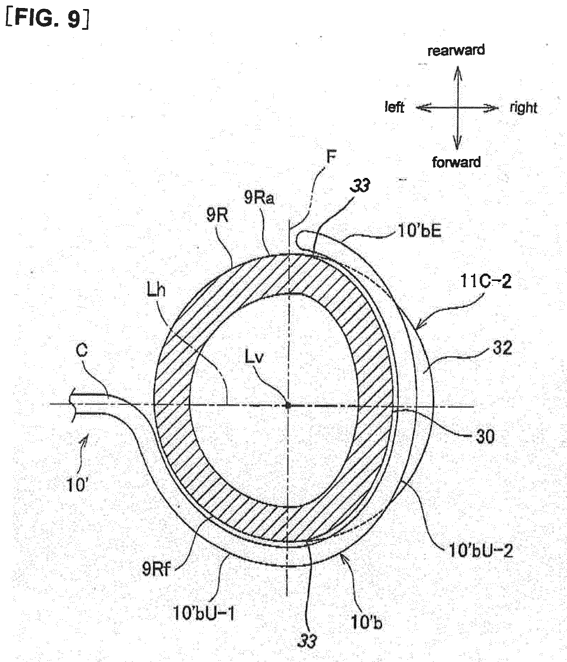

From Figs. 8 and 9, it is to be understood that each of the above-described recessed mounting portions has, defined therein, a curved wall surface area 30, an upper wall surface area 31, and a lower wall surface area 32, and that the curved wall surface area 30 is recessed from the upper and lower wall surface areas 31 and 32 and located therebetween. As far as the Figs. 8 and 9 is concerned, the curved wall surface area 30 extends in a direction along the outer circumferential surface of the right cylindrical side frame portion 9R, while extending toward the inward side of that right cylindrical side frame portion 9R. This curved wall surface area 30 is depicted as decreasing its curvature and recession progressively as it proceeds to a horizontal line F that extends forwardly and rearwardly in a direction orthogonal to the vertical central axis Lv of the cylindrical side frame portion, so that both two recessed ends of that curved surface area 30 terminate and disappear at a location just on the horizontal line F, thus turning to two non-recessed ends 33 and 33 there, respectively. Outer surfaces of such non-recessed ends 33 and 33 are therefore completely united to the outer circumferential surface of the right cylindrical side frame portion 9R in conformity therewith. While this description has been made only as to the second recessed mounting portion by way of one example, it is yet understood that the detailed structure thus described may also apply to the first recessed mounting portion.

According to the above-described structure of this fourth embodiment, the first recessed mounting portion 11C-1, as viewed in cross-section, represents a recess of substantially crescent shape occupying a half circumference range of the left cylindrical side frame portion 9L, whereas likewise, the second recessed mounting portion 11C-2, as viewed in cross-section, represents a recess of substantially crescent shape occupying a half circumference range of the right cylindrical side frame portion 9R. Further, those two crescent recessed mounting portions 11C-1 and 11C-2 are shown to be in a mutually facing relation, with their respective two midway points being both positioned on one and the same horizontal line Lh.

S-spring 10' employed in this fourth embodiment comprises: a main body portion 10'M; a first hooked end portion 10'a; and a second hooked end portion 10'b. As shown in Fig. 10, the first hooked end portion 10'a includes: a short curved region 10'aU-1 configured to permit its contact on and along the forwardly-facing circumferential surface area 9Lf of the left cylindrical side frame portion 9L; and a long curved region 10'aU-2 configured to permit its contact on and along the curved wall surface area 30 of the first recessed mounting portion 11C-1. On the other hand, likewise, the second hooked end portion 10'b includes: a short curved region 10'bU-1 configured to permit its contact on and along the forwardly-facing circumferential surface area 9Rf of the right cylindrical side frame portion 9R; and a long curved region 10'bU-2 configured to permit its contact on and along the curved wall surface area 30 of the second recessed mounting portion 11C-2.

Referring to Fig. 8, it is to be seen that the end 33 of the first recessed mounting portion 11C-1 faces forward side of the left cylindrical side frame and extends in a radial direction from the central axis of the left cylindrical side frame portion, and that likewise, the end 33 of the second recessed mounting portion 11C-2 faces forward side of the right cylindrical side frame portion and extends in a radial direction from the central axis of the right cylindrical side frame portion. Because of this structure, both two curved wall surface areas 30 and 30 of the first and second recessed mounting portions can be accessed directly from the forward side, when mounting the aforesaid S-spring 10' to the left and right cylindrical side frame portions 9L and 9R. Therefore, all actions to be done by a worker merely consist in placing the two distal end portions 10'aE and 10'bE of the first and second hooked end portions 10'a and 10'b upon the first and second recessed mounting portions 11C-1 and 11C-2, respectively, and causing those two distal end portions 10'aE and 10'bE to slide on and along the two curved surface wall areas 30 and 30, respectively. Through such worker's simple actions, each of the two long curved regions 10'aU-2 and 10'bU-2 of the first and second hooked end portions, substantially as a whole thereof, can be closely contacted and hookingly engaged on and along the corresponding one of the two curved surface wall areas 30 and 30 of the first and second recessed mounting portions. Also, concurrent therewith, each of the two short curved regions 10'aU-1 and 10'bU-1 of the first and second hooked end portions, substantially as a whole thereof, can be closely contacted on and along the corresponding one of the two forwardly-facing circumferential surface areas 9Lf and 9Rf of the left and right cylindrical side frame portions 9L and 9R. Thus, it is indeed easy for the worker to quickly finish his or her actions for precise, secure mounting of the S-springs 10' to both left and right cylindrical side frame portions 9L and 9R. This embodiment may also be suitably applied to a fully-automated assembling process or a robotic assembling system for production of seats.

In the present fourth embodiment, in order to assuredly preclude movement and removal of the S-spring 10' from the first and second recessed mounting portions 11C-1 and 11C-2 and also to assuredly avoid frictions and noises that might be caused from between the S-spring and the two recessed mounting portions, it is recommended that, as can be seen in Fig. 10, all the following requirements should be met.
a) A longitudinal central axis of the main body portion 10'M of the S-spring must be coaxial with or nearly coaxial with the horizontal line Lh which is orthogonal to the two vertical central axes Lv respectively of the left and right cylindrical side frame portions 9L and 9R.
b) Each of the two forwardly-facing circumferential surfaces 9Lf and 9Rf of the left and right cylindrical side frame portions 9L and 9R must have a circumferential perimeter equal to an arch of a sector having 45-degree central angle relative to the vertical central axis Lv of the corresponding one of the left and right cylindrical side frame portions. And, each of the two short curved regions 10'aU-1 and 10'bU-1 of the S-spring 10' must have a perimeter equal to or nearly equal to the above-defined circumferential perimeter of the corresponding one of the forwardly-facing circumferential surfaces 9Lf and 9Rf.
c) Each of the two curved wall surface areas 30 and 30 must be formed to extend in a direction circumferentially of the corresponding one of the left and right cylindrical side frame portions 9L and 9R over an entire outer diameter of circular cross-section of the latter. And, each of the two long curved regions 10'aU-2 and 10'bU-2 of the S-spring 10' must have a curvature and overall perimeter which are equal to or nearly equal to curvature and overall perimeter of the corresponding one of the two curved wall surface areas 30 and 30.

Inasmuch as all the above-noted requirements are fully met, the present fourth embodiment indeed ensures that the left short and long curved regions 10'aU-1 and 10'aU-2 of the S-spring 10' are closely contacted and firmly engaged with and along a three-quarters circumferential range of the outer circumferential surface of the left cylindrical side frame portion 9L, such that the left long curved region 10'aU-2, due to its resilient contracting force, makes embracing close contact with an entirety of the curved wall surface area 30 of the first recessed mounting portion 11C-1, while also ensuring that the right short and long curved regions 10'bU-1 and 10'bU-2 of the S-spring 10' are closely contacted and firmly engaged with and along a three-quarters circumferential range of the outer circumferential surface of the right cylindrical side frame portion 9R, such that the right long curved region 10'bU-2, due to its resilient contracting force, makes embracing close contact with an entirety of the curved wall surface area 30 of the second recessed mounting portion 11C-2. Under such state, both two hooked end portions of the S-spring 10' are in a sufficient embracing engagement with the left and right cylindrical side frame portions 9L and 9R, respectively, so that the S-spring 10' is stably supported and retained between the said two cylindrical side frame portions against removal therefrom. In this context, when and while a seat occupant sits on the seat, his or her back portion presses and moves the main body portion 10'M of the S-spring rearwardly, in which case, normally, the S-spring's first and second hooked end portions 10'a and 10'b might be slidingly rotated along the two outer circumferential surfaces of the left and right cylindrical side frame portions 9L and 9R, respectively, and removed therefrom. However, the present embodiment meeting all the above-noted requirements assuredly avoids such sliding rotation and removal of the hooked end portions 10'a and 10'b. This is because the two long curved regions 10'aU-2 and 10'bU-2 of the S-spring 10' are respectively, positively contacted on and along the two gently curved surfaces (i.e. the two curved wall surface areas 30 and 30) which are smaller in curvature than the two short curved regions 10'aU-1 and 10'bU-1 of the S-spring 10', with the latter two short curved regions 10'aU-1 and 10'bU-1 being in turn positively contacted on and along the two outer circumferential surfaces of the left and right cylindrical side frame portions 9L and 9R, respectively, and further the two long curved regions 10'a-2 and 10'bU-2 extend along a half circumference range of the corresponding one of the two cylindrical side frame portions 9L and 9R over an entire diameter of a cross-section of the latter. By the virtue of this structure, a rearward load applied from the seat occupant to the S-spring is imparted to each of the two short curved regions 10'aU-1 and 10'bU-1 and transmitted therethrough to each of the two long curved regions 10'a-2 and 10'b-2 along a circumferential direction of the corresponding one of the left and right cylindrical side frame portions, but, the two long curved regions 10'a-2 and 10'b-2, to which the load is being transmitted, are brought to close contact on and along the two curved wall surface area 30 and 30, respectively, because each of those curved wall surface areas 30 and 30 has the small curvature stated above which does not conform to the circumferential direction of the load being transmitted along the circumference of the corresponding one of the two cylindrical side frame portions. Namely, at this point, the initial circumferentially-applied load from the seat occupant's back portion is now transformed into a non-circumferentially applied load or substantially-non-rotational load at each of the S-spring's two long curved regions 10'aU-2 and 10'bU-2, and such substantially-non-rotational load therefore turns nearly unidirectional to each of the two long curved regions 10'aU-2 and 10'bU-2, thus only acting to bias those particular two regions 10'aU-2 and 10'bU-2 into full engagement with the two curved wall surface areas 30 and 30, respectively.

Owing to the above-elaborated effects of the fourth embodiment, substantially an entirety of the first long curved region 10'aU-2 of the S-spring 10' and substantially an entirety of the second long curved region 10'bU-2 of the same 10' are closely contacted with and retained in the first and second recessed mounting portions 11C-1 and 11C-2, respectively, against movement, thereby avoiding or minimizing the possibility that both two long curved regions 10'aU-2 and 10'bU-2 will be dislocated from their respective positions in any of upper, lower, left and right directions. In addition, the two short curved regions 10'aU-1 and 10'bU-1 of the S-spring 10' are firmly maintained in close contact with and along the two forwardly-facing circumferential surface areas 9Lf and 9Rf of the left and right cylindrical side frame portions 9L and 9R, respectively. Hence, irrespective of any vibration being applied to the S-spring from either a seat occupant or a vehicle body, the arrangements thus described completely or minimally inhibit rattling and wobbling of the two hooked end portions 10'a and 10'b of the S-spring 10', and also avoids or minimizes frictions of the same 10'a and 10'b against the corresponding left and right cylindrical side frame portions 9L and 9R. For that reason, no objectionable noise is generated therefrom, so that a seat occupant may not feel any discomfort.

While not shown, in the present fourth embodiment, such a resin coating as shown in Fig. 4 may be applied to an entire surface of one hooked end portion 10'a of the S-spring 10' as well as to an entire surface of the other hooked end portion 10'b of the same 10'. With this resin coating, the above-noted frictions and objectionable noise can be completely prevented.

According to the present invention, it is to be appreciated that all of the foregoing embodiments are commonly effective in: realizing a rapid, easy operation for ensuring that the S-springs 10 or 10' are extended and retained between the left and right cylindrical side frame portions 9L and 9R against removal therefrom; no necessity of providing additional securing elements to the left and right cylindrical side frame portions for firm mounting of the S-springs thereto; simplifying the mounting structure of the S-springs; and achieving a light weight of the seat back frame 7. Further, it is to be appreciated from the descriptions above that, as one aspect of the invention, each of the first and second end portions 10a and 10b of the S-spring 10 may be closely contacted on and about full or nearly one-seconds circumferential range of the outer circumferential surface of the corresponding one of the left and right cylindrical side frame portions 9L and 9R, and that, as another aspect of the invention, each of the first and second end portions 10'a and 10'b of the S-spring 10' may be closely contacted on and about full or nearly three-quarters circumferential range of the outer circumferential surface of the corresponding one of the left and right cylindrical side frame portions 9L and 9R. Any of these features ensures a stable, hard-to-move mounting of the S-springs to the left and right cylindrical side frame portions, thereby completely preventing or minimizing the wobbling and frictions of the S-spring's first and second end portions against the left and right cylindrical side frame portions, which in turn attains complete or minimal suppression of objectionable noises that might be generated from the wobbling and frictions.

While having described the present invention thus far, it should be understood that the invention is not limited to all the aforementioned embodiments, but any modification and replacement of pertinent parts and elements may be applied to the invention, without departing from the scope of the appended claims.

### Description of the Reference Numerals

- 1 ...: automotive seat
- 6 ...: seat cushion frame
- 7 ...: seat back frame
- 9L ...: left cylindrical side frame portion
- 9R ...: right cylindrical side frame portion
- 10, 10' ...: S-spring
- 10a, 10'a ...: left end portion of the S-spring
- 10b, 10'b ...: right end portion of the S-spring
- 10aU, 10'aU ...: curved region of the left end portion of the S-spring
- 11 ...: generically-indicated conceptual mounting portions to which the left and right end portions of the S-spring are to be mounted, respectively.
- 11A-1 ... a: first hole portion embodied as an exemplary mode of the conceptual mounting portion, to which the left end portion of the S-spring is to be mounted.
- 11A-2 ... a: second hole portion embodied as an exemplary mode of the conceptual mounting portion, to which the right end portion of the S-spring is to be mounted.
- 11B-1 ... a: first truncated-conical hole portion embodied as an exemplary mode of the conceptual mounting portion, to which the left end portion of the S-spring is to be mounted.
- 11B-2 ... a: second truncated-conical hole portion embodied as an exemplary mode of the conceptual mounting portion, to which the right end portion of the S-spring is to be mounted.
- 11C-1 ... a: first recessed mounting portion embodied as an exemplary mode of the conceptual mounting portion, to which the left end portion of the S-spring is to be mounted.
- 11C-2 ... a: second recessed mounting portion embodied as an exemplary mode of the conceptual mounting portion, to which the right end portion of the S-spring is to be mounted.
- P ...: resin coating
- SB ...: seat back SC ... seat cushion

## Claims

1. A sinuous spring mounting structure in a seat back including a seat back frame forming a part of the seat back, said seat back frame including a first cylindrical portion and a second cylindrical portion, wherein said first and second cylindrical portions are disposed in an opposedly-facing relation with each other, and wherein said sinuous spring mounting structure is adapted for allowing at least one sinuous spring to be mounted to said first and second cylindrical portions so as to be extended therebetween,
said sinuous spring mounting structure being **characterized in that**:
said at least one sinuous spring has: a first end portion including a curved region; and a second end portion including a curved region;
said first cylindrical portion of said seat back frame includes a first mounting portion for allowing said first end portion of said at least one sinuous spring to be mounted thereto; and
said second cylindrical portion of said seat back frame includes a second mounting portion for allowing said second end portion of said at least one sinuous spring to be mounted thereto;
and **characterized in that** said first and second end portions of said at least one sinuous spring are mounted to said first and second mounting portions, respectively, in such a manner that said curved region of said first end portion is contacted on and along an outer circumferential surface of said first cylindrical portion, whereas said curved region of said second end portion is contacted on and along an outer circumferential surface of said second cylindrical portion.

2. The sinuous spring mounting structure in the seat back as described in claim 1, wherein said first and second end portions of said at least one sinuous spring are each coated with a resin material.

3. The sinuous spring mounting structure in the seat back as described in claim 1, wherein said first mounting portion comprises a first hole portion configured to allow said first end portion of said at least one sinuous spring to be inserted and hookingly engaged therein, whereas said second mounting portion comprises a second hole portion configured to allow said second end portion of said at least one sinuous spring to be inserted and hookingly engaged therein, wherein said first end portion is inserted and hookingly secured in said first hole portion, with said curved region of said first end portion being contacted on and along said outer circumferential surface of said first cylindrical portion, and wherein said second end portion is inserted and hookingly secured in said second hole portion, with said curved region of the second end portion being contacted on and along said outer circumferential surface of said second cylindrical portion.

4. The sinuous spring mounting structure in the seat back as described in claim 3, wherein said first and second end portions of said at least one sinuous spring are each coated with a resin material.

5. The sinuous spring mounting structure in the seat back as described in claim 1, wherein said first mounting portion comprises a first truncated-conical hole portion formed in said first cylindrical portion, said first truncated-conical hole portion opening divergent in a direction from an inside to the outer circumferential surface of said first cylindrical portion, wherein said first truncated-conical hole portion therefore has a sloped surface that becomes progressively narrow in area in a direction from the outer circumferential surface to the inside of said first cylindrical portion, wherein, similarly to said first mounting portion, said second mounting portion comprises a second truncated-conical hole portion formed in said second cylindrical portion, said second truncated-conical hole portion opening divergent in a direction from an inside to the outer circumferential surface of said second cylindrical portion, wherein said second mounting portion therefore has a sloped surface that becomes progressively narrow in area in a direction from the outer circumferential surface to the inside of said second cylindrical portion, wherein said first end portion of said at least one sinuous spring is inserted and hookingly secured in said first truncated-conical hole portion, with said curved region of said first end portion being contacted on and along said outer circumferential surface of said first cylindrical portion, and wherein said second end portion of said at least one sinuous spring is inserted and hookingly secured in said second truncated-conical hole portion, with said curved region of said second end portion being contacted on and along said outer circumferential surface of said second cylindrical portion.

6. The sinuous spring mounting structure in the seat back as described in claim 5, wherein said first and second end portions of said at least sinuous spring are each coated with a resin material.

7. The sinuous spring mounting structure in the seat back as described in claim 1, wherein said first mounting portion comprises a first recessed mounting portion formed in said first cylindrical portion so as to extend in a circumferential direction along said outer circumferential surface of said first cylindrical portion, wherein said second mounting portion comprises a second recessed mounting portion formed in said second cylindrical portion so as to extend in a circumferential direction along said outer circumferential surface of said second cylindrical portion, wherein said first end portion as well as said curved region thereof, which are formed in said at least one sinuous spring, are both hookingly engaged in and along said first recessed mounting portion, and wherein said second end portion as well as said curved thereof, which are formed in said at least one sinuous spring, are both hookingly engaged in and along said second recessed mounting portion.

8. The sinuous spring mounting structure in the seat back as described in claim 5, wherein said first and second end portions of said at least sinuous spring are each coated with a resin material.
